# EUROPEAN PATENT APPLICATION

(11) **EP 0 816 242 A1**
(43) Date of publication of application: **07.01.1998**
(21) Application number: 97107285.5
(22) Date of filing: 02.05.1997
(51) Int. Cl.: B65D 25/32

(54) **Handle for containers and a method for manufacturing and mounting handles to containers**

(30) Priority: 30.05.1996 SE 9602109
(71) Applicant: Lagan Plast AB, S-341 91 Ljungby (SE)
(72) Inventor: Jönsson, Sven-Ake, 331 33 Värnamo (SE); Arvidsson, Thomas, 340 13 Hamneda (SE)
(74) Representative: Linde, Leif

(57) **Abstract**

A handle of plastic material for containers such as pails, buckets and the like is provided with connection means adapted at the mounting of the handle to its container to be connected with complementary connection means thereon. In order to facilitate the mounting of the handle to the container and provide that the handle takes prior to mounting a predetermined position the handle (2) forms together with handles of the same kind a flat unit of handles connected with each other (10,18), from which unit the handle is separated prior to mounting. The invention relates also to a method of manufacturing and mounting handles of this kind to containers.

## Description

The present invention relates to a handle of plastic material for containers, such as pails, buckets and the like and a method for manufacturing and mounting handles consisting of plastic material to containers, such as pails, buckets and the like.

Plastic material handles for plastic containers, such as pails, buckets and the like consisting of plastic are at their end portions provided with connection means adapted at the mounting of the handles to the containers to be connected with complementary connection means formed thereon.

It is desirable that handles for plastic containers consist of plastic material. If the handles as well as the containers consist of plastic material it is easy to recover the plastic material by working and recovering the containers including the handles attached thereto. If the handles consist of another material than plastic, for example metal wire, it is necessary to remove the handles from the containers before the containers are worked and the plastic material of the containers can be recovered which includes an additional working moment at the same time as the material of the handles can not be recovered. In spite of the fact that it represents from the recovering point of view a drawback to manufacture handles for plastic containers of another material than plastic, handles for plastic containers have to a large extent been manufactured from for example metal wire which is caused by the difficulties in mounting plastic handles manufactured by for example injection moulding to the containers while using prior art technique. This is in turn caused by the fact that the plastic handles subsequently to the manufacturing by means of for example injection moulding take completely random positions on for example a pallet or in a container, which prevents mounting by means of robots or other machinery equipment. Thus, when mounting plastic handles on containers it has been necessary to conduct the mounting work by hand. Because of the high mounting costs caused thereby the use of handles consisting of plastic has to a large extent been avoided in spite of the advantages represented by the plastic handles from the recycling point of view.

The object of the invention is to provide a handle consisting of plastic material for containers and a method of manufacturing and mounting to containers handles consisting of plastic material, the design of the handles and the method of manufacturing and mounting the handles making it possible mount the handles by means of machines in spite of the fact that the handles are preferably manufactured from plastic material by means of injection moulding.

In order to comply with this object the handle according to the invention is characterized in that the handle is prior to the mounting on the container forming together with handles of the same kind a unit of handles connected with each other.

Because of the fact that the handles are prior to the mounting to the containers forming units in which the positions of the handles are defined and from which the handles are successively separated prior to the mounting, it is possible to mount the handles to the containers by means of robots and similar machinery equipment.

It is preferred that the handle included in the unit is of substantially the same shape as the intended shape of the handle subsequently to the mounting on a container.

The handle according to the invention is preferably substantially arc-shaped having a central portion and two shanks, the connection means being provided at the free ends of the shanks and the central portion of the handle being positioned adjacent the central portions of the rest of the handles of the unit, the free ends of the shanks being positioned at the periphery of the unit. The handles of the unit can be connected directly with each other and/or by means of separate connection elements. Preferably the units of handles connected with each other are provided with means for defining the position and/or fixing several units stacked on each other in relation to each other and these means for defining the position and/or for fixing can suitably be provided on the separate connection elements of the units.

In the method according to the invention for manufacturing and mounting handles of plastic material to containers the handles are preferably manufactured by injection moulding as units of several handles connected with each other, and the handles are separated from the unit in question prior to the mounting to the containers.

Subsequently to the manufacturing the units are preferably stacked on the top of each other so that the handles will form stacks which can be easily transported, stored and handled in other ways. When the handles shall be mounted to the containers the stacks of connected units are displaced to the vicinity of the containers where the units are by means of any kind of suitable mounting machine successively separated from the stack, the handles are successively separated from each unit and the handles are finally mounted to their containers.

In the method according to the invention it is in connection with the manufacturing and mounting easy in an automatic way to investigate if the handles are fully injection moulded, if the handles have the required strength, especially bending stiffness, and so on.

The invention shall be described in the following with reference to the accompanying drawings.

Fig. 1a is a plan view of a unit consisting of handles according to the invention.

Fig. 1b is a side view of a stack of units of the kind shown in Fig. 1.

Fig. 1c shows a detail of the stack shown in Fig. 1a.

Fig. 2 is a plan view corresponding to Fig. 1 of a modified embodiment of a unit consisting of handles according to the invention.

Fig. 3 is a further modified embodiment of a unit consisting of handles according to the invention corresponding to Figs. 1a and 2.

Fig. 4 schematically illustrates the method for manufacturing and mounting handles according to the invention.

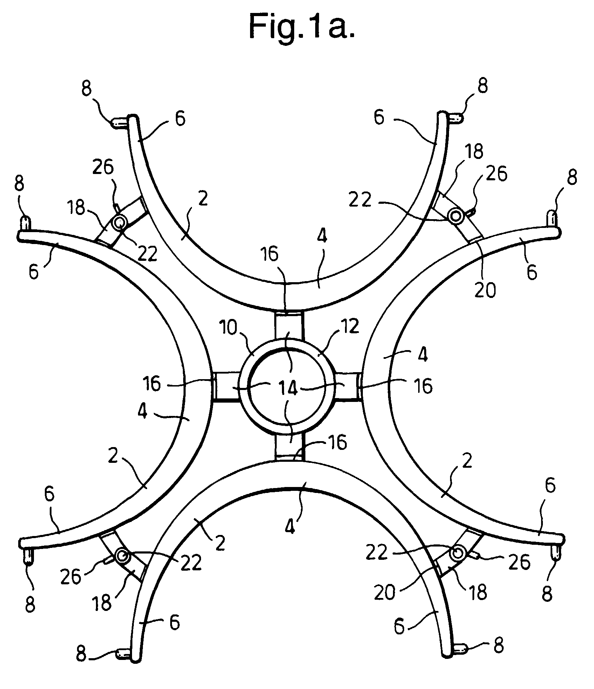

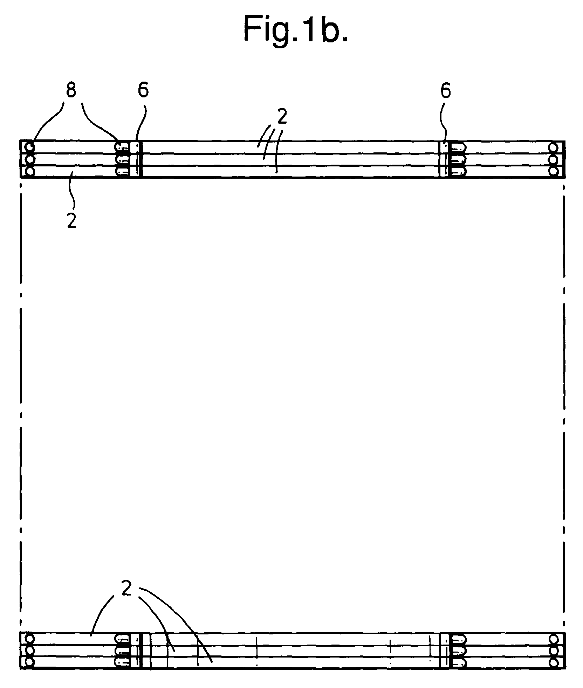

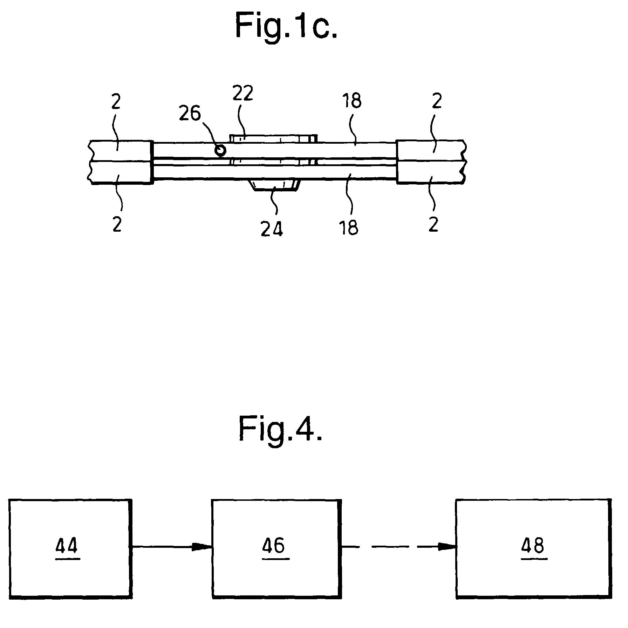

In Fig. 1 there is shown a unit consisting of four handles 2 and manufactured by means of injection moulding of plastic material, preferably polypropylene. The handles 2 are arc-shaped more precisely of half-circular shape, and each handle has a central portion 4 and two shanks 6. The shanks 6 of the handles are at their free ends provided with connection means in the form of radially extending pins 8. The pins 8 shall be used for connecting the handles to the containers or the like which shall be supported by means of the handles. For example the pins 8 can be connected with connection means on the containers which have the form of openings in flap-shaped elements at the edge portions of the containers. Thus, the handles 2 have already in the unit consisting of four handles the final shape which the handles shall have subsequently to the mounting to each of the containers.

The handles 2 are oriented in such a way in the unit that they have their central portions 4 positioned adjacent each other and have the free ends of the shanks 6 including the connection means 8 positioned at the periphery of the unit. The central portions 4 of the handles are connected with each other by means of a connection element 10 consisting of a ring 12 and flaps 14 extending radially therefrom. The flaps 14 are preferably connected with the central portions 4 of the handles 2 by means of weakened portions, fractural impressions or the like 16 intended to facilitate a subsequent separation of the handles from the connection element 10. The shanks 6 of the handles 2 are at a distance from the free end portions of the shanks connected with each other by means of strip-shaped connection elements 18 which like the connection element 10 is connected with the handles 2 by means of weakened portions or fractural impressions 20. Of course, the weakened portions or the fractural impressions 20 have the object of the facilitating separation of the handles from the connection portions 18 and from each other.

At their upper sides the connection portions 18 have centrally positioned, annular projections 22 and have at their lower sides also centrally positioned conical pegs 26 which subsequently to the injection moulding of the units consisting of the handles 2 indicate that the mould used in connection with the injection moulding has been completely injected and that the handles are thereby complete and present a correct appearance. The indication pegs 26 can be automatically scanned, and if one or more of the indication pegs 26 are missing the unit is rejected. Instead of the indication pegs 26 the connection means formed as pins 8 can be used as indication means for indicating a fully injected mould.

The units according to Fig. 1a are subsequently to the injection moulding stacked on each other in a stack as is schematically shown in Fig. 1b. At the stacking operation the positions of the units are fixed in relation to each other by the fact that the conical pegs 24 engage the central portion of the annual projections 22 in accordance with what is on an enlarged scale shown in Fig. 1c.

The fixing of the position of the units in the stack can be provided in another way than by the engagement between the projections 22 and the pegs 24, for example by engagement between the units at outer guiding surfaces. For example, it is possible to position the units on a column extending through the space in the ring 12 of the connection element 10.

A stack of units of handles of the kind shown in Fig. 1a can include for example 40 - 60 units. The handles are exactly defined with regard to their position in the stack which makes it possible to mount the handles on the containers by the use of the suitable machine equipment.

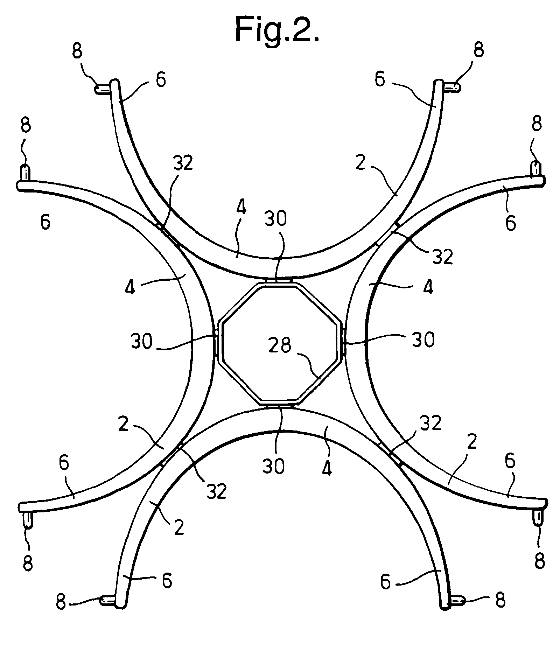

In Fig. 2 there is shown a somewhat modified unit of handles 2 of the same kind as the handles shown in Fig. 1a. Thus, also the handles 2 according to Fig. 2 comprise a central portion 4, shanks 6 and connection means in the form of pins 8. In the embodiment according to Fig. 2 the handles are at their central portions 4 connected with each other by means of an octagonal connection element 28 which is connected with the central portions 4 of the handles by means of weakened portions or fractural impressions 30. In addition thereto the handles 2 according to Fig. 2 are directly connected with each other at connection points 32 in which the handles are connected with each other without a real connection element other than a thin plastic material portion.

When stacking units of the kind shown in Fig. 2 the octagonal connection elements 28 are used as means for defining the positions of the units by the fact that the connection elements 28 have at their lower sides projecting portions engaging with the inner surface of the connection element 28 positioned adjacent below the projecting portion.

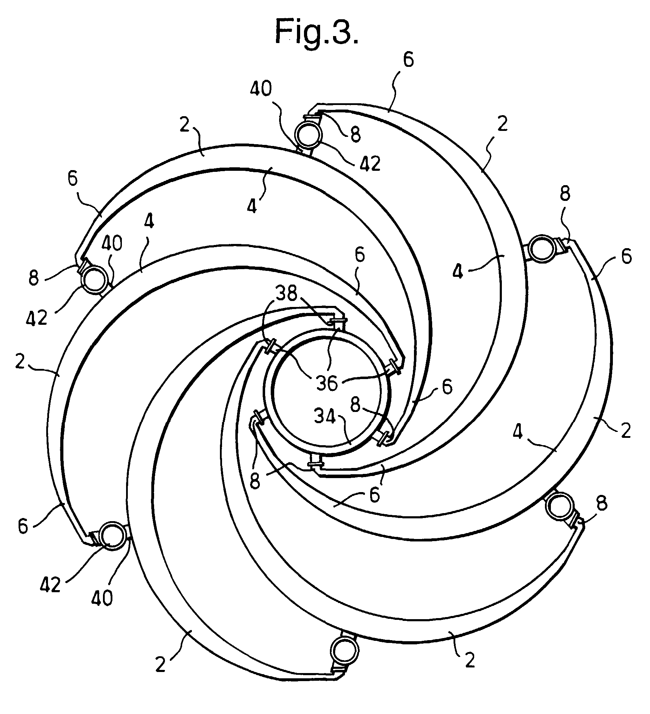

It is realized that the handles according to the invention can in many ways be connected with each other to units in which the handles have defined positions for facilitating a subsequent mounting. Of course, the units can include more or less handles than four and it is of course possible to arrange the handles in the units in other ways than with the central portions positioned adjacent each other and the free ends of the shanks positioned at the peripheries of the units. Thus, the unit shown in Fig. 3 comprises six handles 2 which like the handles of the embodiments according to Figs. 1 and 2 have a central portion 4, shanks 6 and connection means in the form of pins 8. In the unit according to Fig. 3 the handles 2 are positioned so that one shank 6 of each handle is positioned at the central portion of the unit while the other shank 6 is positioned at the periphery of the unit. One shank 6 of each handle 2 is connected with the rest of the corresponding shanks at the center of the unit by means of an annular connection element 44 having flaps 36 which by means of fractural impressions 38 are connected with the pins 8 of the shanks. Each of the handles has its shank positioned at the periphery of the unit connected with the central portion 4 of one of the adjacent handles and has its central portion 4 connected with one of the shanks of the other of the adjacent handles. The connection between one shank 6 and one central portion 4 of the handles at the periphery of the unit is provided by means of connection elements 4 which at its central portion have annular elements 42 each having an upper recess and a lower projection. The projections are intended to engage the recesses when stacking several units on each other so as to fix and define the positions of the units in the stack.

It is possible also to stack the units of the stacks in such a way that the most projecting parts of the handles in the direction of the thickness of the handles are positioned between the non-projecting portions of adjacent units in the stack so that the total thickness of the stack is thereby reduced.

In Fig. 4 there is schematically illustrated a method for manufacturing and mounting handles according to the invention. The handles are manufactured in the form of units of the kind which is as examples shown in Figs. 1 and 2 in an injection moulding apparatus, which can work with for example a single-cavity mould, a multiple-cavity mould or a multi-daylight cavity mould.

A picking robot 46 picks up the units of the handles manufactured in the injection mould from the injection moulding apparatus. After the units have been scanned for determining that the units are completely moulded which is provided by scanning the indicating pins 26 and/or the connection means 8 formed as pins. The units are stacked on a load support or transportation device for being displaced to a magazine for storing or directly to a machine 48 for mounting the handles to their containers. The mounting machine receives the stacks of units of handles, successively separates the units of handles from the stack and separates each handle 2 from each unit. Because of the fact that the handles 2 are fixed with regard to their position in the unit the handling of the handles by means of the mounting machine can be conducted without any problems.

Preferably the mounting machine 48 is provided with equipment for checking the strength of the separate handles 2 before the handles are mounted to the containers. The strength of the handles is checked especially with regard to bending stiffness. After it has been checked that the handles 2 have sufficient strength the handles 2 are mounted on the containers by connecting the connection means 8 of the handles to the complementary connection means of the containers.

The invention can be modified within the scope of the following claims.

## Claims

1. A handle consisting of plastic material for containers, such as pails, buckets and the like which at its end portions is provided with connection means (8) adapted at the mounting of the handle to a container to be connected with complementary connection means provided thereon, **characterized** in that the handle (2) prior to the mounting to the container forms together with other handles (2) of the same kind a unit of handles connected with each other.

2. A handle as claimed in claim 1, **characterized** in that the handle (2) included in the unit is of substantially the same shape as the intended shape of the handle (2) subsequently to the mounting of the handle to a container.

3. A handle as claimed in claim 1 or 2, **characterized** in that the unit of handles (2) connected with each other is substantially flat.

4. A handle as claimed in any of claims 1 - 3, **characterized** in that the handle is substantially arc-shaped having a central portion (4) and two shanks (6), the connection means (8) being positioned at the free ends of the shanks.

5. A handle as claimed in claim 4, **characterized** in that the central portion (4) of the handle is positioned adjacent the central portions of the rest of the handles included in the unit and that that the free ends of the shanks (6) are positioned at the periphery of the unit.

6. A handle as claimed in claim 5, **characterized** in that the central portion (4) of the handle is by means of a separate connection element (10) connected with the central portions (4) of the rest of the handles included in the unit.

7. A handle as claimed in any of claims 4 - 6, **characterized** in that the handle (2) and the rest of the handles (2) included in the unit are directly connected with each other (at 30) at opposite sides of their central portions (4).

8. A handle as claimed in any of claims 4 - 6, **characterized** in that the handle (2) and the rest of the handles (2) included in the unit are at opposite sides of their central portions (4) connected with each other by means of separate connection elements (18).

9. A handle as claimed in claim 4, **characterized** in that the handle (2) has one of its shanks (6) positioned at the central portion at the unit and has its other shank (6) positioned at the periphery of the unit.

10. A handle as claimed in claim 9, **characterized** in that the shank of the handle (2), positioned at the central portion of the unit is by means of a separate connection element (34) connected with one of the shanks (6) of the rest of the handles (2) included in the unit.

11. A handle as claimed in claim 9 or 10, **characterized** in that the handle (2) has its other shank (6) connected with a central portion of a handle positioned at one side thereof in the unit and has its central portion (4) connected with the other shank (6) of a handle positioned at the other side of the handle in the unit.

12. A handle as claimed in any of the preceding claims, **characterized** in that the unit of handles connected with each other is provided with means (22, 24; 42) for defining the position of and/or fixing several units stacked on each other in relation to each other.

13. A handle as claimed in claim 12, **characterized** in that the means (22, 24; 42) for defining the position and/or fixing the units in relation to each other are arranged on connection elements (10; 40) connecting the handles (2) of the unit with each other.

14. A handle as claimed in any of the preceding claims, **characterized** by scannable indicating means (26; 8) for indicating that the handle is by manufacturing thereof by injection moulding fully moulded.

15. A handle as claimed in claim 14, **characterized** in that said indicating means (25) are constituted by the connection means (8) of the handle.

16. A handle as claimed in claim 14, **characterized** in that the indicating means (26) are positioned on the connection elements (18) between the handles included in the unit.

17. A method of manufacturing and mounting plastic material handles on containers such as pals, buckets and the like, the handles being at their end portions provided with connection means which at the mounting of the handles to the containers are connected with complementary connection means formed on the containers, **characterized** in that the handles (2) are manufactured in the form of units of several handles connected with each other and that the handles are prior to the mounting to the containers separated from their respective units.

18. A method as claimed in claim 17, **characterized** in that the handles are manufactured so that they present the same shape in the unit as the intended shape of the handles subsequently to the mounting to the containers.

19. A method as claimed in claim 17 or 18, **characterized** in that the unit of several handles connected with each other are manufactured by injection moulding (44).

20. A method as claimed in any of claims 17 - 19, **characterized** in that the units consisting of several handles connected with each other are arranged in stacks of units positioned on each other.

21. A method as claimed in claim 20, **characterized** in that the units are positioned in a displaced or rotated position in relation to adjacent units of the stack so as to position projecting portions of the units between projecting portions of adjacent units in order to reduce the height of the stacks.

22. A method as claimed in claim 20 or 21, **characterized** in that the stacks of units of handles are displaced to the vicinity of the containers, that the units are successively separated from its stack and that the handles of each unit which have been separated from the stack are successively separated from its unit and are mounted to their containers.

23. A method as claimed in any of claims 17 - 22, **characterized** in that the units of handles connected with each other are provided with indicating projections the presence thereof indicating completely moulded handles and that the presence of indication projections is scanned subsequently to the manufacturing and prior to the mounting of the handles.

24. A method as claimed in claim 23, **characterized** in that the indicating projections are scanned subsequently to the manufacturing of the units of handles connected with each other but prior to the positioning of the units into stacks.

25. A method as claimed in claim 23 or 24, **characterized** in that the indicating projections are manufactured on connection elements by means of which the handles of the units are connected with each other.

26. A method as claimed in any of claims 17 - 25, **characterized** in that the strength of the handles, for example stiffness, is checked after the handles have been separated from its unit but prior to the mounting to the containers.
